(19) **Europäisches Patentamt**
**European Patent Office**
**Office européen des brevets**

(11) **EP 4 668 181 A1**

(12) **EUROPEAN PATENT APPLICATION**

(43) Date of publication:
24.12.2025 Bulletin 2025/52

(51) International Patent Classification (IPC):
**G06Q 10/04** (2023.01) **G06Q 50/18** (2012.01)

(21) Application number: 25181293.9

(22) Date of filing: 06.06.2025

(52) Cooperative Patent Classification (CPC):
**G06Q 10/04; G06Q 50/184**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 20.06.2024 JP 2024100032

(71) Applicant: Alps Alpine Co., Ltd.
Tokyo 145-8501 (JP)

(72) Inventors:
• YABE, Tetsuro
Tokyo, 145-8501 (JP)
• ITOH, Akihisa
Tokyo, 145-8501 (JP)

(74) Representative: **Maiwald GmbH
Engineering
Elisenhof
Elisenstrasse 3
80335 München (DE)**

(54) **INFORMATION PROCESSING DEVICE, INFORMATION PROCESSING METHOD, AND PROGRAM**

(57) An information processing device (10) includes an acquisition unit (20) configured to acquire predetermined acquisition information (220) from intellectual property data (5), a calculation unit (30) configured to calculate, for each applicant, an intellectual property evaluation value (310) in each technology classification in a predetermined period on the basis of the acquisition information (220), a distribution generation unit (40) configured to generate a distribution on the basis of the intellectual property evaluation value (310) calculated by the calculation unit (30), and a distribution placement unit (50) configured to place the distribution.

FIG. 1

EP 4 668 181 A1

**Description**

BACKGROUND OF THE INVENTION

1. Field of the Invention

The present invention relates to an information processing device, an information processing method, and a program.

2. Description of the Related Art

There are known technologies that use patent information to analyze information on companies and individuals who are patent applicants or patentees (see, for example, Japanese Unexamined Patent Application Publication Nos. 2011-138331 and 2022-158621 and Ernst H, Omland N. The Patent Asset Index - A new approach to benchmark patent portfolios. World Patent Informat (2010), doi:10.1016/j.wpi.2010.08.008). Japanese Unexamined Patent Application Publication No. 2011-138331 discloses a patent profit calculation device characterized in that it calculates the correlation with business revenue for each applicant. Japanese Unexamined Patent Application Publication No. 2022-158621 discloses a technology for associating applicants with each other using technical characteristics based on data sets in which patent classification information and an applicant are associated with each other, setting each of the applicants as a node, setting the association between the applicants as an edge, and clustering the respective nodes into groups with a relatively high degree of association based on the state of coupling between the nodes by the edge, and creating a technical bird's-eye view in graph form. In Ernst H, Omland N. The Patent Asset Index - A new approach to benchmark patent portfolios. World Patent Informat (2010), doi:10.1016/j.wpi.2010.08.008, a technology for correcting a patent evaluation value is disclosed.

With an information processing device, an information processing method, and a program, it is desired that the technology classification characterized by "concentration and selection" performed by each applicant be ascertained.

SUMMARY OF THE INVENTION

The present invention has been made in view of the above facts and provides an information processing device and an information processing method with which the technology classification characterized by "concentration and selection" performed by each applicant be ascertained.

An information processing device according to a first aspect of the present invention includes an acquisition unit configured to acquire predetermined acquisition information from intellectual property data, a calculation unit configured to calculate, for each applicant, an intellectual property evaluation value in each technology classification in a predetermined period based on the acquisition information, a distribution generation unit configured to generate a distribution based on the intellectual property evaluation value calculated by the calculation unit, and a distribution placement unit configured to place the distribution.

In the information processing device according to the first aspect of the present invention, on the basis of the acquisition information obtained from the intellectual property data, the intellectual property evaluation value in each technology classification in a predetermined period is calculated for each applicant. On the basis of the intellectual property evaluation value, a distribution is generated. A trend in technology classification of each applicant in the predetermined period is displayed in the distribution. As a result, it is possible to ascertain the technology classification characterized by "concentration and selection" of each applicant.

In an information processing device according to a second aspect of the present invention, the acquisition unit may acquire, for each applicant, an evaluation value in each technology classification in a predetermined period as the acquisition information in the first aspect.

In the information processing device according to the second aspect of the present invention, the intellectual property evaluation value is easily calculated by acquiring, for each applicant, the evaluation value in each technology classification in the predetermined period as the acquisition information. Accordingly, it is possible to easily ascertain the technology classification characterized by the "concentration and selection" of each applicant.

In an information processing device according to a third aspect of the present invention, the evaluation value may include at least one of the number of applications, the number of published applications, the number of patents, the number of citations, the number of cited times, and a total of their weighted values in the second aspect.

In the information processing device according to the third aspect of the present invention, on the basis of at least one of the number of applications, the number of published applications, the number of patents, the number of citations, the number of cited times, and the total of their weighted values, a distribution can be generated. Accordingly, it is possible to accurately ascertain the technology classification characterized by the "concentration and selection" of each applicant.

In an information processing device according to a fourth aspect of the present invention, the calculation unit may calculate, using first acquisition information in a predetermined period and second acquisition information in a period different from the predetermined period of the first acquisition information in the acquisition information, a difference of the evaluation value in each technology classification in the second acquisition information with respect to the evaluation value in the technology classification in the first acquisition information as the intellectual property evaluation value and calculate a group of the intellectual property evaluation values as difference information in any one of the first to third aspects.

In the information processing device according to the fourth aspect of the present invention, by calculating the group of the intellectual property evaluation values calculated from the difference of the evaluation value in each technology classification in the second acquisition information with respect to the evaluation value in the technology classification in the first acquisition information as the difference information, the difference information is reflected in the distribution. Accordingly, it is possible to more accurately ascertain the technology classification characterized by the "concentration and selection" of each applicant.

In an information processing device according to a fifth aspect of the present invention, the distribution generation unit may generate a normal distribution as the distribution in any one of the first to fourth aspects.

In the information processing device according to the fifth aspect of the present invention, by generating a normal distribution as the distribution, a random variable in each technology classification is displayed in the normal distribution. Accordingly, it is possible to more accurately ascertain the technology classification characterized by the "concentration and selection" of each applicant.

In an information processing device according to a sixth aspect of the present invention, the distribution generation unit may generate a normal distribution based on the difference information, acquire an expected value and a standard deviation, and hold the normal distribution, the expected value, and the standard deviation in the fourth aspect.

In the information processing device according to the sixth aspect of the present invention, by holding the expected value, the standard deviation, and the normal distribution generated on the basis of the difference information, the normal distribution is stored. Accordingly, the stored normal distribution is used to visualize the aspect of a technology classification of each applicant. As a result, it is possible to more accurately ascertain the technology classification characterized by the "concentration and selection" of each applicant.

In an information processing device according to a seventh aspect of the present invention, the distribution placement unit may place the normal distribution on coordinate axes in three dimensions, with a random variable axis as a random variable of the normal distribution, a base axis as at least one of an expected value of the normal distribution, a standard deviation of the normal distribution, and a total of their weighted values, and a probability density axis as a probability density of the normal distribution in the fifth aspect.

In the information processing device according to the seventh aspect of the present invention, by placing a normal distribution on the coordinate axes in three dimensions, with the random variable axis as the random variable of the normal distribution, the base axis as at least one of the expected value of the normal distribution, the standard deviation of the normal distribution, and the total of their weighted values, and the probability density axis as the probability density of the normal distribution, the normal distributions of multiple applicants are placed along the base axis. Accordingly, it is possible to ascertain the speeds of change in the "concentration and selection" of the multiple applicants.

In an information processing device according to an eighth aspect of the present invention, the distribution placement unit may place the normal distribution on coordinate axes in two dimensions, with a random variable axis as a random variable of the normal distribution and a base axis as at least one of an expected value of the normal distribution, a standard deviation of the normal distribution, and a total of their weighted values in the fifth aspect.

In the information processing device according to the eighth aspect of the present invention, by placing a normal distribution on the coordinate axes in two dimensions, with the random variable axis as the random variable of the normal distribution and the base axis as at least one of the expected value of the normal distribution, the standard deviation of the normal distribution, and the total of their weighted values, the normal distribution is visualized in two dimensions. Accordingly, it is possible to further ascertain the speeds of change in the "concentration and selection" of multiple applicants and accurately ascertain the technology classifications that are concentrated on and selected by each of the applicants.

In an information processing device according to a ninth aspect of the present invention, the distribution placement unit may place the normal distribution on coordinate axes in three dimensions, with a random variable axis as a random variable of the normal distribution, a probability density axis as a probability density of the normal distribution, and a time axis in the fifth aspect.

In the information processing device according to the ninth aspect of the present invention, by placing a normal distribution on the coordinate axes in three dimensions, with the random variable axis as the random variable of the normal distribution, the probability density axis as the probability density of the normal distribution, and the time axis, the normal distributions of an applicant in a predetermined period are placed side by side along the time axis. Accordingly, it is possible to ascertain a trend in technology classification of the applicant.

In an information processing device according to a tenth aspect of the present invention, the distribution placement unit may place the normal distribution on coordinate axes in two dimensions, with a random variable axis as a random variable of the normal distribution and a time axis in the fifth aspect.

In the information processing device according to the tenth aspect of the present invention, by placing the normal distribution on the coordinate axes in two dimensions, with the random variable axis as the random variable of the normal distribution and the time axis, the normal distributions of an applicant in a predetermined period are visualized in two dimensions. Accordingly, it is possible to ascertain the transition of each technology classification of the applicant.

An information processing method according to an eleventh aspect of the present invention includes acquiring predetermined acquisition information from intellectual property data, calculating, for each applicant, an intellectual property evaluation value in each technology classification in a predetermined period based on the acquisition information, and generating a distribution based on the intellectual property evaluation value.

In the information processing method according to the eleventh aspect of the present invention, on the basis of the acquisition information obtained from the intellectual property data, the intellectual property evaluation value in each technology classification in a predetermined period is calculated for each applicant. On the basis of the intellectual property evaluation value, a distribution is generated. A trend in technology classification of each applicant in the predetermined period is displayed in the distribution. As a result, it is possible to ascertain the technology classifications that are concentrated on and selected by each applicant.

A program according to a twelfth aspect of the present invention causes a computer to implement acquiring predetermined acquisition information from intellectual property data, calculating, for each applicant, an intellectual property evaluation value in each technology classification in a predetermined period based on the acquisition information, and generating a distribution based on the intellectual property evaluation value.

In the program according to the twelfth aspect of the present invention, on the basis of the acquisition information obtained from the intellectual property data, the intellectual property evaluation value in each technology classification in a predetermined period is calculated for each applicant. On the basis of the intellectual property evaluation value, a distribution is generated. A trend in technology classification of each applicant in the predetermined period is displayed in the distribution. As a result, it is possible to ascertain the technology classifications that are concentrated on and selected by each applicant.

BRIEF DESCRIPTION OF THE DRAWINGS

Fig. 1 is a schematic diagram illustrating the hardware configuration of an information processing device according to a first embodiment;

Fig. 2 is a diagram illustrating the functional configuration of the information processing device according to the first embodiment;

Fig. 3 is a diagram illustrating an acquisition unit according to the first embodiment;

Fig. 4 is a diagram illustrating a calculation unit according to the first embodiment;

Fig. 5 is a diagram illustrating a distribution generation unit according to the first embodiment;

Fig. 6 is a diagram illustrating an example of placement by a distribution placement unit according to the first embodiment;

Fig. 7 is a flowchart illustrating a process performed by the information processing device according to the first embodiment;

Fig. 8 is a diagram illustrating a distribution placement unit according to a second embodiment;

Fig. 9 is a diagram illustrating the distribution placement unit according to the second embodiment;

Fig. 10 is a diagram illustrating an example of placement by the distribution placement unit according to the second embodiment;

Fig. 11 is a diagram illustrating an example of placement by a distribution placement unit according to a third embodiment;

Fig. 12 is a diagram illustrating an example of placement by a distribution placement unit according to a fourth embodiment;

Fig. 13 is a diagram illustrating an example of placement by a distribution placement unit according to another embodiment;

Fig. 14 is a diagram illustrating an example of placement by a distribution placement unit according to another embodiment; and

Fig. 15 is a diagram illustrating an example of placement by a distribution placement unit according to another embodiment.

## DESCRIPTION OF THE PREFERRED EMBODIMENTS

First embodiment

A first embodiment of the present invention will be described below with reference to drawings. In the following description, elements that have substantially the same function or the same configuration may be assigned the same symbol and redundant descriptions may be omitted. Hardware Configuration of Information Processing Device 10

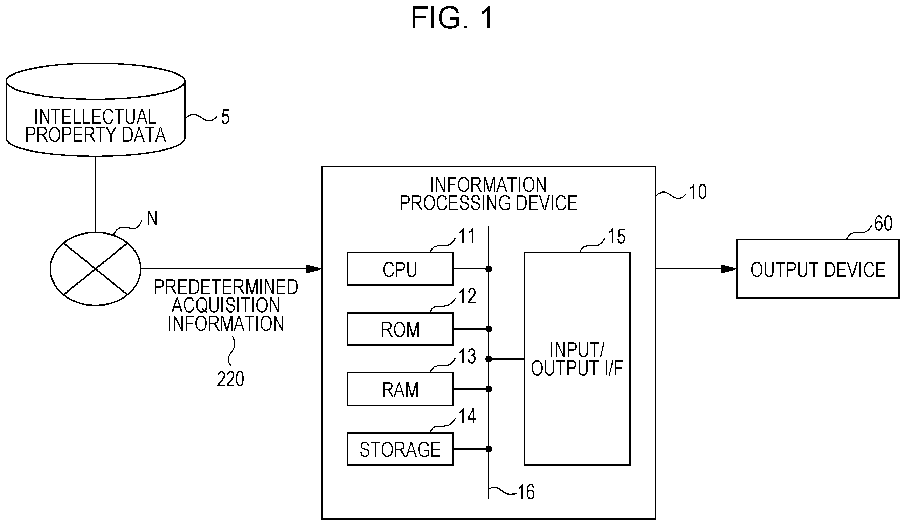

As illustrated in Fig. 1, an information processing device 10 according to the first embodiment performs information processing using intellectual property data 5 from which predetermined acquisition information 220 is acquired. Applicants are assumed to be various companies, universities, and research institutes. As technology classifications, IPCs that have already been classified and are available and classifications that have been made after the publication of an application by, for example, text mining are assumed.

The information processing device 10 acquires the predetermined acquisition information 220 from the intellectual property data 5 via a network N, processes processing information, and outputs the processing information to an output device 60.

The intellectual property data 5 is a database that stores multiple pieces of published intellectual property information. The pieces of intellectual property information may include patent information, utility model information, design information, and trademark information. The pieces of intellectual property information may also include not only those that have been registered but also those that are pending. The pieces of intellectual property information may include at least one of gazette information, application progress information, appeal information, and litigation information issued by public organizations such as patent offices in respective countries and regions (including international organizations) (the same applies hereafter). The pieces of intellectual property information may include, for example, information that has been summarized, analyzed, etc. on the basis of intellectual property information issued by public organizations in respective countries and regions.

The information processing device 10 is configured as an electronic control unit (ECU) for performing various controls. The information processing device 10 includes a central processing unit (CPU) 11, a read-only memory (ROM) 12, a random access memory (RAM) 13, a storage 14, and an input-output interface (I/O I/F) 15. Respective components are communicatively connected to each other via a bus 16.

In the information processing device 10, the CPU 11 reads programs stored in the ROM 12 and the storage 14 and executes them while expanding them in the RAM 13 to realize functions corresponding to the programs.

The input/output I/F 15 is connected to the output device 60, and information processed in the information processing device 10 is output to the output device 60. The output device 60 is, for example, an image display device or a printer.

Functional Configuration of the Information Processing Device 10

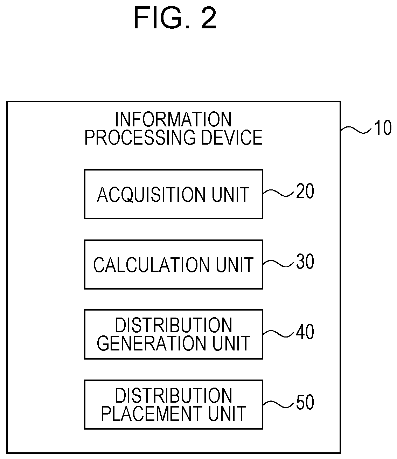

As illustrated in Fig. 2, the information processing device 10 functionally includes an acquisition unit 20, a calculation unit 30, a distribution generation unit 40, and a distribution placement unit 50.

The Acquisition Unit 20

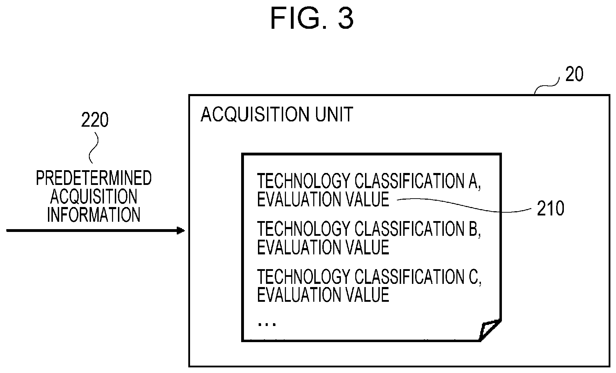

As illustrated in Fig. 3, the acquisition unit 20 acquires, for each applicant, an evaluation value 210 in each technology classification in a predetermined period as acquisition information 220. The acquisition unit 20 acquires, for a specific applicant, the evaluation value 210 in each technology classification in a predetermined period as the acquisition information 220. The evaluation value 210 may include at least one of values calculated from, for example, the number of applications, the number of published applications, the number of patents, the number of citations, the number of cited times, and the number of application regions, and the total of their weighted values in each technology classification. The predetermined period is, for example, July 1, 2016 to June 30, 2018.

The Calculation Unit 30

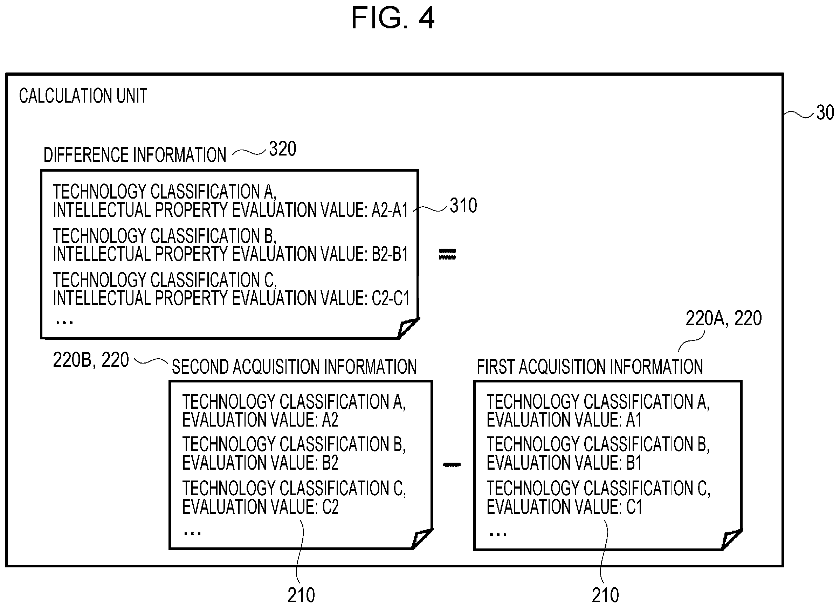

As illustrated in Fig. 4, the calculation unit 30 calculates, for each applicant, an intellectual property evaluation value 310 to be described below in each technology classification in a predetermined period on the basis of the acquisition information 220. The calculation unit 30 calculates the intellectual property evaluation value 310 in each technology classification on the basis of the acquisition information 220, which has been acquired for each applicant by the acquisition unit 20 and includes the evaluation value 210 in each technology classification in a predetermined period, to obtain difference information 320 to be described below. The calculation unit 30 calculates, using first acquisition information 220A in a predetermined period and second acquisition information 220B in a period different from the period of the first acquisition information 220A in the acquisition information 220, the difference of an evaluation value in each technology classification in the second acquisition information 220B with respect to an evaluation value in the technology classification in the first acquisition information 220A as the intellectual property evaluation value 310 and calculates the group of the intellectual property evaluation values 310 as the difference information 320.

The calculation unit 30 uses the acquisition information 220, which is the output from the acquisition unit 20, to calculate the intellectual property evaluation value 310. The calculation unit 30 calculates the intellectual property evaluation value 310 on the basis of the pieces of acquisition information 220 in two different periods for the same applicant. The acquisition information 220 may include the first acquisition information 220A and the second acquisition information 220B in a newer period than the first acquisition information 220A. The calculation unit 30 may create a difference between the evaluation values 210 in the same technology classification to obtain the intellectual property evaluation value 310.

For example, in Fig. 4, when there is A2 as the evaluation value 210 in a technology classification A in the second acquisition information 220B and A1 as the evaluation value 210 in the technology classification A in the first acquisition information 220A, the intellectual property evaluation value 310 in the technology classification A as the difference information 320 is calculated by A2 - A1.

As one of the first acquisition information 220A and the second acquisition information 220B, virtual information may be used. In the actual calculation, there may be no count value in a technology classification in one of the period of the second acquisition information 220B and the period of the first acquisition information 220A. In this case, zero may be substituted as the evaluation value 210 in that uncounted period to calculate the intellectual property evaluation value 310.

In the actual calculation, the technology classification for which no count values are provided in both the period of the second acquisition information 220B and the period of the first acquisition information 220A may be treated as not being present from the beginning. With this processing by which the technology classification is limited to the technology classification that the applicant actually dealt with, the effect on the distribution of technology classifications that were not dealt with can be eliminated.

The Distribution Generation Unit 40

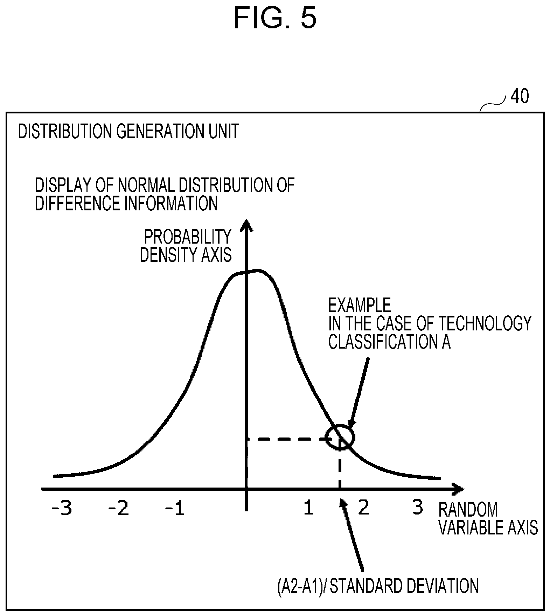

As illustrated in Fig. 5, the distribution generation unit 40 generates a distribution on the basis of the intellectual property evaluation value 310 calculated by the calculation unit 30. The distribution generation unit 40 calculates an expected value that characterizes each distribution in a normal distribution (an example of a distribution) and a value relating to a normalized distribution, generates a distribution, acquires the expected value and a standard deviation, and holds the normal distribution, the expected value, and the standard deviation. The distribution is not limited to a normal distribution, but may be, for example, a normal strain distribution (an example of a distribution) or a Poisson distribution (an example of a distribution).

First, the distribution generation unit 40 obtains an expected value. Specifically, the distribution generation unit 40 uses the intellectual property evaluation value 310 in technology classifications A, B, C, ... included in the difference information 320 calculated by the calculation unit 30 to obtain the expected value by the following expression (1). For example, in Fig. 4, the intellectual property evaluation value 310 is A2 - A1, B2 - B1, and C2 - C1. There may be N technology classifications.

Expression 1

$$\mu = \frac{1}{N}\{(A_2 - A_1) + (B_2 - B_1) + (C_2 - C_1) + \cdots\}$$

Next, the distribution generation unit 40 obtains a square mean value <X2> with the following expression (2) to obtain a standard deviation $\sigma$.

Expression 2

$$\langle X^2 \rangle = \frac{1}{N}\{(A_2 - A_1)^2 + (B_2 - B_1)^2 + (C_2 - C_1)^2 + \cdots\}$$

Next, the distribution generation unit 40 uses the following expression (3) to obtain the standard deviation $\sigma$. The standard deviation $\sigma$ is the square root of <X2> minus the square of $\mu$.

Expression 3

$$\sigma = \sqrt{\langle X^2 \rangle - \mu^2}$$

Next, the distribution generation unit 40 uses the following expression (4) to calculate a normal distribution $\varphi(x)$ with $\mu$ and $\sigma$.

Expression 4

$$\emptyset(x) = \frac{1}{\sqrt{2\pi\sigma^2}} exp\left(-\frac{(x-\mu)^2}{2\sigma^2}\right)$$

Plotting Expression (4) leads to the normal distribution in Fig. 5. The position of a specific technology classification on a normal distribution is the position of the difference of that technology classification divided by the standard deviation. For example, in Fig. 5, the position of the intellectual property evaluation value 310 of A2 - A1 in the technology classification A on a normal distribution is located at (A2 - A1)/the standard deviation $\sigma$ on a random variable axis that is a horizontal axis.

In Fig. 5, the normal distribution is used, but the distribution may be, for example, the t distribution, the F distribution, the chi-squared distribution, or the Poisson distribution. It is assumed that the indicator regarding the speed of change in "concentration and selection" in these distributions can be used for comparison with multiple applicants by using an integrated and normalized probability density value to eliminate a difference in size of, for example, the actual portfolio for each applicant.

The Distribution Placement Unit 50

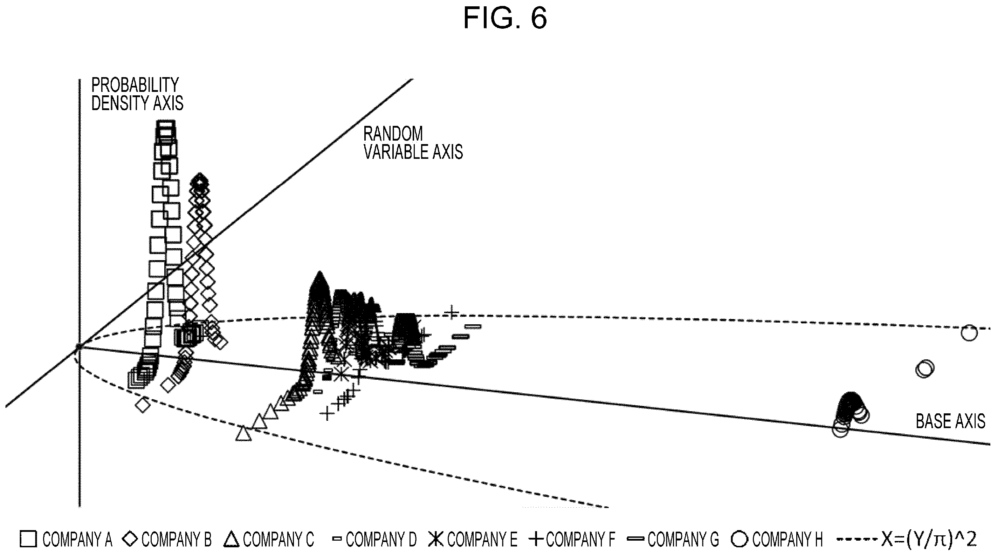

As illustrated in Fig. 6, the distribution placement unit 50 places a normal distribution on the coordinate axes in three dimensions, with a random variable axis A1 as the random variable of the normal distribution, a base axis A2 as at least one of the expected value of the normal distribution, the standard deviation of the normal distribution, and the total of their weighted values, and a probability density axis A3 as the probability density of the normal distribution. In Fig. 6, as an example, normal distributions are placed on the coordinate axes in three dimensions formed of the random variable axis A1, the base axis A2, and the probability density axis A3 for eight companies, Company A, Company B, Company C, Company D, Company E, Company F, Company G, and Company H. The distribution placement unit 50 places the normal distributions of the eight competitors, expressed in terms of probability density and random variable, with standard deviation values as the speed of change in "concentration and selection".

Specifically, as illustrated in Fig. 6, the distribution placement unit 50 operates the acquisition unit 20, the calculation unit 30, and the distribution generation unit 40 once or multiple times to place the speed of change in "concentration and selection" as an indicator. "Concentration" is determined on the basis of, for example, an applicant's technology classification with the trend of expansion, and "selection" is determined on the basis of, for example, an applicant's technology classification with the trend of downsizing.

That is, the distribution placement unit 50 places the normal distribution on the coordinate axes in three dimensions, with the random variable axis A1 as the normal distribution obtained by the distribution generation unit 40 as an indicator, the base axis A2 as an indicator of the speed of change in "concentration and selection", and the probability density axis A3 as the probability density of the normal distribution.

By introducing an indicator of the speed of change in "concentration and selection" on the base axis A2 and performing plotting on a single graph, it is possible to compare the application trends of respective companies in focus.

Relationship between Standard Deviation and Diffusion Coefficient

The appropriateness of using a standard deviation for the speed of change in "concentration and selection" of an applicant itself will be described on the basis of the relationship between the standard deviation and a diffusion coefficient. The diffusion equation is expressed in Expression (5).

Expression 5

$$\frac{\partial}{\partial t}\rho(x,t) = D\frac{\partial^2}{\partial x^2}\rho(x,t)$$

Expression (5) can also be derived from a random walk (for reference, "Randamu na genshou no suugaku" by Ei Teramoto, Yoshioka Shoten). In a random walk, a probability $\rho(x, t)$ of being at a position x at a time t is expressed by Expression (6).

Expression 6

$$\rho(x, t + \Delta t) = \frac{1}{2}\rho(x + \Delta x, t) + \frac{1}{2}\rho(x - \Delta x, t)$$

Subtracting $\rho(x, t)$ from both sides of Expression (6) and transforming it yields Expression (7).

Expression 7

$$\frac{\rho(x,t+\Delta t)-\rho(x,t)}{\Delta t}\Delta t = \frac{\rho(x+\Delta x,t)-\rho(x,t)}{2(\Delta x)^2}(\Delta x)^2 - \frac{\rho(x,t)-\rho(x-\Delta x,t)}{2(\Delta x)^2}(\Delta x)^2$$

Here, the diffusion coefficient is defined by the following expression (8).

Expression 8

$$D = \frac{(\Delta x)^2}{2\Delta t}$$

If $\Delta t \to 0$ and $\Delta x \to 0$, Expression (5) is derived from Expression (7). The analytical solution of a one-dimensional diffusion equation solved with initial conditions of $\rho(x, t = 0) = \delta(x)$ is as follows (for reference, "Rikoukei no suugaku 6" Furie kaiseki by Shinichi Oishi, Iwanami Shoten).

Expression 9

$$\rho(x, t) = \frac{1}{2\sqrt{\pi Dt}}exp\left(-\frac{x^2}{4Dt}\right)$$

On the other hand, when a binomial distribution is repeated a large number of trials, it approximates a normal distribution. In Expression (9) that is the diffusion equation, whether to go right or left is randomly determined by a random number. In Expression (9), from a macro perspective, the probability of going right is equal to the probability of going left. Expression (9) can therefore be equated with Expression (4) that is the equation of the normal distribution (at the time of $\mu = 0$) approximated from a binomial distribution that always bifurcates to the right or left. Therefore, coefficients in Expressions (4) and (9) can be compared with each other, and Expression (10) that represents the relationship between the standard deviation $\sigma$ and a diffusion coefficient D is obtained.

Expression 10

$$\sigma = \sqrt{2Dt}$$

Expression (10) represents the relationship between the standard deviation and the one-dimensional diffusion coefficient D. In Expression (8), the square of a step size is divided by a time step in the random walk. Accordingly, Expression (10) representing the standard deviation $\sigma$ has the same dimension as the distance (length). Thus, the large standard deviation $\sigma$ means that the diffusion coefficient D is large, holding the time term constant. On the other hand, a greater value of the diffusion coefficient implies faster diffusion, that is, diffusion over greater distances. A technology classification is therefore advanced more quickly to the outer region of the distribution. From this, it is considered that the greater the diffusion coefficient, the higher the speed of change in "concentration and selection" of an applicant itself. As described above, the greater the standard deviation, the degree of the speed of change in "concentration and selection", that is, a diffusion, is more advanced. This is the background for the use of the standard deviation as one element to represent the speed of change in "concentration and selection" of an applicant itself.

In the present disclosure, the application trend of an applicant is analyzed with a normal distribution, which is easy to calculate. However, there are limits to fitting the state in which some forces are exerted to the above simple diffusion equation (normal distribution), like the state of a company that willingly advances the development of a certain technology classification (in the positive direction of the random variable) and the state of a company that had to downsize the development of a certain technology classification (in the negative direction of the random variable) for some reason. In fact, there are applicants' analysis results that the negative or positive direction in the normal distribution is not so large. The deviation of an actual curve from the normal distribution becomes an issue. Approximating factors due to, for example, will using the evolution equation of the diffusion equation is considered to be a future challenge (for reference, "Ouyou suugaku gyousho Hatten houteishiki no suuchi kaiseki", by Nobuo Yajima and Tatsuo Nomoto, Iwanami Shuppan).

Process of the Information Processing Device 10

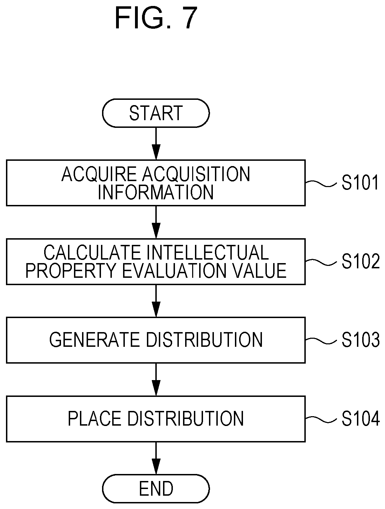

As illustrated in Fig. 7, when the process is started, the acquisition unit 20 acquires, for each applicant, the evaluation value 210 in each technology classification in a predetermined period as the acquisition information 220 (step S101). Specifically, for example, for each of the eight companies, the acquisition unit 20 sets the period of July 1, 2016 to June 30, 2018 as the period of the first acquisition information 220A and the period of July 1, 2021 to June 30, 2023 as the period of the second acquisition information 220B and acquires, as the evaluation value 210, the number of published applications in each IPC main group as a technology classification.

Subsequently, the calculation unit 30 calculates, for each applicant, the intellectual property evaluation value 310 to be described below in each technology classification in a predetermined period on the basis of the acquisition information 220 (step S102). Specifically, for example, the calculation unit 30 calculates the difference information 320 between the first acquisition information 220A and the second acquisition information 220B.

Subsequently, the distribution generation unit 40 generates a distribution on the basis of the intellectual property evaluation value 310 calculated by the calculation unit 30 (step S103). Specifically, for example, the distribution generation unit 40 generates a normal distribution, an expected value, and a standard deviation by performing the operations from Expressions (1) to (4).

Subsequently, the distribution placement unit 50 places the distribution (step S104) and ends the process. Specifically, for example, the distribution placement unit 50 places the normal distribution on the coordinate axes in three dimensions, with the random variable axis A1, the base axis A2, and the probability density axis A3.

Operation

The information processing device 10 according to the first embodiment includes the acquisition unit 20 configured to acquire the predetermined acquisition information 220 from the intellectual property data 5, the calculation unit 30 configured to calculate, for each applicant, the intellectual property evaluation value 310 in each technology classification in a predetermined period on the basis of the acquisition information 220, the distribution generation unit 40 configured to generate a distribution on the basis of the intellectual property evaluation value 310 calculated by the calculation unit 30, and the distribution placement unit 50 configured to place the distribution (see Fig. 2).

On the basis of the acquisition information 220 obtained from the intellectual property data 5, the intellectual property evaluation value 310 in each technology classification in a predetermined period is calculated for each applicant. On the basis of the intellectual property evaluation value 310, a distribution is generated. A trend in technology classification of each applicant in the predetermined period is displayed in the distribution. As a result, it is possible to ascertain the technology classification characterized by the "concentration and selection" of each applicant.

In the information processing device 10 according to the first embodiment, the acquisition unit 20 may acquire, for each applicant, an evaluation value in each technology classification in a predetermined period as the acquisition information 220.

The intellectual property evaluation value 310 is easily calculated by acquiring, for each applicant, the evaluation value in each technology classification in the predetermined period as the acquisition information 220. Accordingly, it is possible to easily ascertain the technology classification characterized by the "concentration and selection" of each applicant.

In the information processing device 10 according to the first embodiment, the evaluation value may include at least one of the number of applications, the number of published applications, the number of patents, the number of citations, the number of cited times, and the total of their weighted values.

On the basis of at least one of the number of applications, the number of published applications, the number of patents, the number of citations, the number of cited times, and the total of their weighted values, a distribution can be generated. Accordingly, it is possible to accurately ascertain the technology classification characterized by the "concentration and selection" of each applicant.

In the information processing device 10 according to the first embodiment, the calculation unit 30 may calculate, using the first acquisition information 220A in a predetermined period and the second acquisition information 220B in a period different from the period of the first acquisition information 220A in the acquisition information 220, the difference of an evaluation value in each technology classification in the second acquisition information 220B with respect to an evaluation value in the technology classification in the first acquisition information 220A as the intellectual property evaluation value 310 and calculate the group of the intellectual property evaluation values 310 as the difference information 320.

By calculating the group of the intellectual property evaluation values 310 calculated from the difference of the evaluation value in each technology classification in the second acquisition information 220B with respect to the evaluation value in the technology classification in the first acquisition information 220A as the difference information 320, the difference information 320 is reflected in the distribution. Accordingly, it is possible to more accurately ascertain the technology classification characterized by the "concentration and selection" of each applicant.

In the information processing device 10 according to the first embodiment, the distribution generation unit 40 may generate a normal distribution as the distribution.

By generating a normal distribution as the distribution, a random variable in each technology classification is displayed in the normal distribution. Accordingly, it is possible to more accurately ascertain the technology classification characterized by the "concentration and selection" of each applicant.

In the information processing device 10 according to the first embodiment, the distribution generation unit 40 may generate a normal distribution on the basis of the difference information 320, acquire an expected value and a standard deviation, and hold the normal distribution, the expected value, and the standard deviation.

By holding the expected value, the standard deviation, and the normal distribution generated on the basis of the difference information 320, the normal distribution is stored. Accordingly, the stored normal distribution is used to visualize the aspect of a technology classification of each applicant. As a result, it is possible to more accurately ascertain the technology classification characterized by the "concentration and selection" of each applicant.

The larger the value of the standard deviation, the smaller the contact intercept of the probability density axis A3 of the normal distribution curve. The standard deviation is one element that expresses the degree of the speed of change in the "concentration and selection" of an applicant itself. It is considered that the greater the value of the standard deviation, the greater the concentration and the degree. If the normal distribution curve is displayed as it is, the contact intercept of the probability density axis A3 becomes smaller and the speed becomes higher. This makes it difficult to understand the degree of the speed of change in "concentration and selection".

In the information processing device 10 according to the first embodiment, the distribution placement unit 50 may place a normal distribution on coordinate axes in three dimensions, with the random variable axis A1 as the random variable of the normal distribution, the base axis A2 as at least one of the expected value of the normal distribution, the standard deviation of the normal distribution, and the total of their weighted values, and the probability density axis A3 as the probability density of the normal distribution.

By placing a normal distribution on the coordinate axes in three dimensions, with the random variable axis A1 as the random variable of the normal distribution, the base axis A2 as at least one of the expected value of the normal distribution, the standard deviation of the normal distribution, and the total of their weighted values, and the probability density axis A3 as the probability density of the normal distribution, the normal distributions of multiple applicants are placed along the base axis A2. Accordingly, it is possible to ascertain the speeds of change in the "concentration and selection" of the multiple applicants.

In an information processing method according to the first embodiment, the predetermined acquisition information 220 is acquired from the intellectual property data 5, the intellectual property evaluation value 310 in each technology classification in a predetermined period is calculated for each applicant on the basis of the acquisition information 220, and a distribution is generated on the basis of the intellectual property evaluation value 310.

On the basis of the acquisition information 220 obtained from the intellectual property data 5, the intellectual property evaluation value 310 in each technology classification in a predetermined period is calculated for each applicant. On the basis of the intellectual property evaluation value 310, a distribution is generated. A trend in technology classification of each applicant in the predetermined period is displayed in the distribution. As a result, it is possible to ascertain the technology classifications that are concentrated on and selected by each applicant.

A program according to the first embodiment causes a computer to acquire the predetermined acquisition information 220 from the intellectual property data 5, calculate, for each applicant, the intellectual property evaluation value 310 in each technology classification in a predetermined period on the basis of the acquisition information 220, and generate a distribution on the basis of the intellectual property evaluation value 310.

On the basis of the acquisition information 220 obtained from the intellectual property data 5, the intellectual property evaluation value 310 in each technology classification in a predetermined period is calculated for each applicant. On the basis of the intellectual property evaluation value 310, a distribution is generated. A trend in technology classification of each applicant in the predetermined period is displayed in the distribution. As a result, it is possible to ascertain the technology classifications that are concentrated on and selected by each applicant.

Second Embodiment

The information processing device 10 according to a second embodiment differs from the first embodiment in that the configuration of the distribution placement unit 50 is different. The same terminology or the same symbols are used to describe the same or equivalent parts described in the above embodiment.

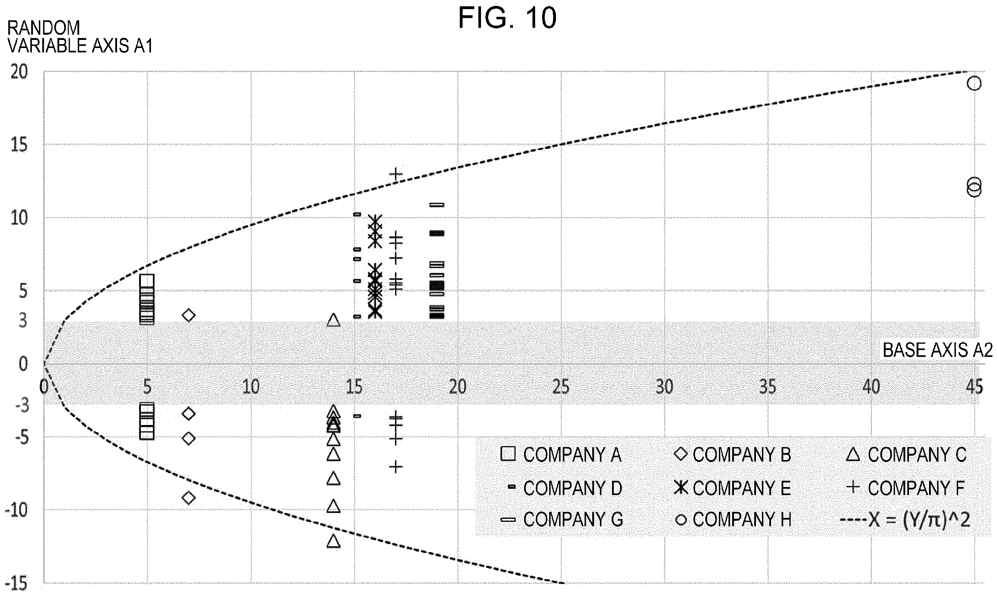

As illustrated in Fig. 10, the distribution placement unit 50 places a normal distribution on the coordinate axes in two dimensions, with the random variable axis A1 as the random variable of the normal distribution and the base axis A2 as at least one of the expected value of the normal distribution, the standard deviation of the normal distribution, and the total of their weighted values.

The distribution placement unit 50 may place a normal distribution on coordinate axes in three dimensions formed of the random variable axis A1, the base axis A2, and the probability density axis A3, and then place the normal distribution on the coordinate axes in two dimensions formed of the random variable axis A1 and the base axis A2.

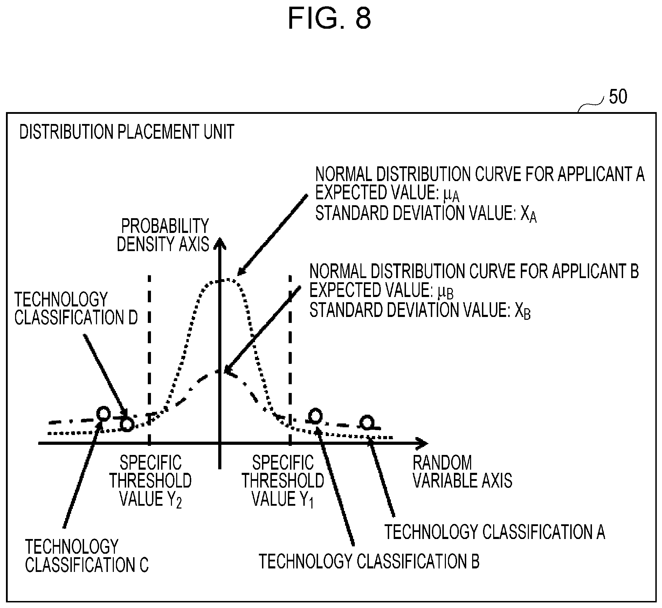

Specifically, as illustrated in Fig. 8, the distribution placement unit 50 can set threshold values Y1 and Y2 in advance on the random variable axis for normal distributions. The technology classification greater than or equal to the threshold value Y1 is a region where an applicant "concentrates" on, for example, filing or publication. The technology classification less than or equal to the threshold value Y2 is a region where an applicant downsizes, for example, filing or publication by "selection".

It is apparent from Fig. 8 that the technology classifications A and B of an applicant B are located to be greater than or equal to the threshold value Y1 and are "concentrated" on. It is also apparent that the technology classification C of the applicant B is located to be less than or equal to the threshold value Y2 and the applicant downsizes, for example, filing or publication by "selection". It is also apparent that the technology classification D of an applicant A is located to be less than or equal to the threshold value Y2 and the applicant downsizes, for example, filing or publication by "selection". The expected value and the standard deviation value for the applicant A are μA and XA, respectively and the expected value and the standard deviation value for the applicant B are μB and XB, respectively.

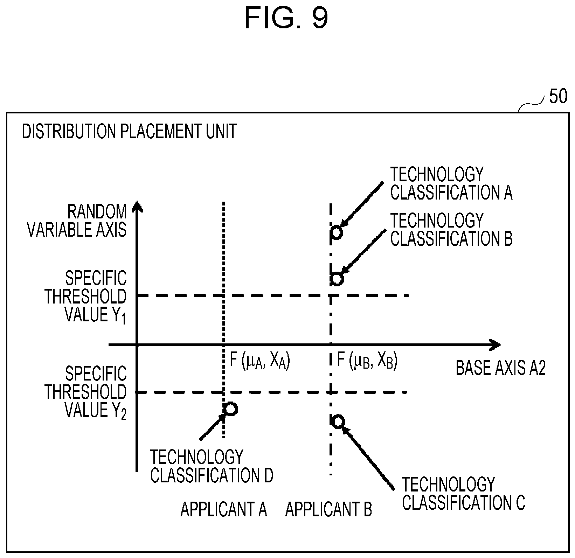

In Fig. 9, the vertical axis is the random variable axis A1, with the specific threshold value Y1 and the specific threshold value Y2. The horizontal axis represents the base axis A2 that introduces an indicator of the speed of change in "concentration and selection". As described in the first embodiment, the larger the value of the indicator of the base axis A2, the greater the degree of the speed of change in "concentration and selection". The base axis A2 is represented by a function F(). The function F() is defined by an expected value and a standard deviation value X, and for example, may be placed at the value of X itself, i.e., $F(μ, X) = X$. For example, the function F() may be placed at $F(μ, X) = X$ when the value of $μ$ is positive. For example, the function F() may be placed at $F(μ, X) = -X$ when the value of $μ$ is negative. The function F() can also be defined in other ways.

Since it is considered from the relationship between the standard deviation and the diffusion coefficient that the larger the standard deviation, the greater the degree of the speed of change in "concentration and selection", i.e., the diffusion is more advanced, the indicator of the speed of change in "concentration and selection" can express the speed of change in "concentration and selection" of an applicant itself.

In Fig. 9, it can be said that the technology classifications A and B of the applicant B are "concentrated" on because they are located in the positive part of the random variable axis A1. On the other hand, since the technology classification C of the applicant B is located in the negative part of the random variable axis A1, it can be said that the applicant downsizes, for example, filing or publication by "selection". Since the technology classification D of the applicant A is located in the negative part of the random variable axis A1, it can be said that the applicant downsizes, for example, filing or publication by "selection".

That is, Fig. 9 illustrates the comparison between the degrees of the speed of change in "concentration and selection" of multiple applicants and the technology classifications that the respective multiple applicants concentrate on and select.

As illustrated in Fig. 10, the distribution placement unit 50 places a normal distribution on the coordinate axes in two dimensions, with the random variable axis A1 as the random variable of the normal distribution and the base axis A2 as at least one of the expected value of the normal distribution, the standard deviation of the normal distribution, and the total of their weighted values. In Fig. 10, as an example, normal distributions are placed on the coordinate axes in two dimensions formed of the random variable axis A1 and the base axis A2 for eight companies, Company A, Company B, Company C, Company D, Company E, Company F, Company G, and Company H. The distribution placement unit 50 places the normal distributions of the eight competitors, expressed in terms of probability density and random variable, with standard deviation values as the speed of change in "concentration and selection".

In Fig. 10, the vertical axis is the random variable axis A1 and the horizontal axis is the base axis A2 with a standard deviation as the speed of change in "concentration and selection". Technology classifications greater than or equal to $3\sigma$ and less than or equal to $-3\sigma$ are plotted. In fact, the technology classification can be illustrated for each plot, but is not illustrated in the present disclosure. This display clarifies which technology classification each company concentrates on and downsizes by selection, making it easier to understand the degree of the speed of change in the "concentration and selection" of each company itself as compared with the three-dimensional display.

Company H in this example has an extremely high degree of the speed of change in "concentration and selection". Another investigation revealed that Company H invested in development and strengthened three technology classifications during this period. In the case of Companies B and C, they have negative expected values and have many technology classifications with values less than or equal to $-3\sigma$. Both companies downsize the technology classifications in which they have initially excelled and seek a shift to new technology classifications.

Table 1 indicates, for each of the companies, an expected value, a standard deviation, and the results of counting of technology classifications that appear at and above $3\sigma$ and at and below $-3\sigma$ set as threshold values. The counting was performed on the basis of the graph in Fig. 10.

Table 1

| | Expected Value | Standard Deviation | the Number of Technology Classifications at and above $3\sigma$ | the Number of Technology Classifications at and below $-3\sigma$ |
|---|---|---|---|---|
| Company A | 0.468 | 5.599 | 10 | 6 |
| Company B | -0.723 | 7.137 | 1 | 5 |
| Company C | -1.765 | 13.744 | 1 | 11 |
| Company D | 1.537 | 15.437 | 5 | 1 |
| Company E | 4.375 | 16.737 | 12 | 0 |
| Company F | 1.780 | 17.489 | 9 | 5 |
| Company G | 4.948 | 19.4759 | 16 | 0 |
| Company H | 3.558 | 45.193 | 3 | 0 |

Operation

In the information processing device 10 according to the second embodiment, the distribution placement unit 50 may place a normal distribution on coordinate axes in two dimensions, with the random variable axis A1 as the random variable of the normal distribution and the base axis A2 as at least one of the expected value of the normal distribution, the standard deviation of the normal distribution, and the total of their weighted values (see Fig. 10).

By placing a normal distribution on the coordinate axes in two dimensions, with the random variable axis A1 as the random variable of the normal distribution and the base axis A2 as at least one of the expected value of the normal distribution, the standard deviation of the normal distribution, and the total of their weighted values, the normal distribution is visualized in two dimensions. Accordingly, it is possible to further ascertain the speeds of change in the "concentration and selection" of multiple applicants and accurately ascertain the technology classifications that are concentrated on and selected by each of the applicants.

That is, when a small company increases the number of applications and promotes development even though the number of portfolios is originally small, a portfolio numerical size is smaller than that of a company that can make a larger investment. However, even in the case of a change that is not large in terms of the portfolio of a small company, the degree of the speed of change in the "concentration and selection" of an applicant itself can be captured by using a normalized predetermined value.

By clearly representing technology classifications greater than or equal to a specific threshold value on the random variable axis and technology classifications less than or equal to a specific threshold value on the random variable axis, the technology classifications "concentrated" on by an applicant and the technology classifications downsized by "selection" can be clearly represented despite the size of the applicant. That is, when a small company increases the number of applications and promotes development in a specific technology classification even through the number of portfolios is originally small, a portfolio numerical size in the specific technology classification is smaller than that of a large company. However, even in the case of a change of the small company that is not large, the applicant's actual "concentration and selection" of technology classifications can be captured by clearly representing the technology classifications greater than or equal to the specific threshold value and the technology classifications less than or equal to the specific threshold value. Accordingly, the direction of investment of each company can be clarified, and the comparison between companies regarding the effects of their investments can be easily performed.

Other configurations and operational effects are the same as those in the above embodiment, and the descriptions thereof are therefore omitted.

Third Embodiment

An information processing device according to a third embodiment differs from the above embodiments in that the configuration of the distribution placement unit is different. The same terminology or the same symbols are used to describe the same or equivalent parts described in the above embodiments.

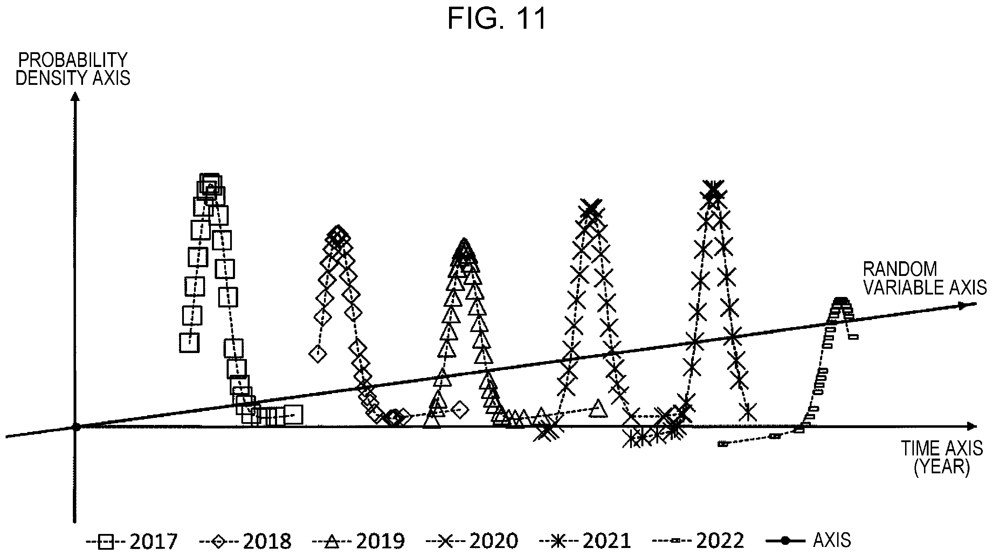

As illustrated in Fig. 11, the distribution placement unit 50 places a normal distribution on the coordinate axes in three dimensions, with the random variable axis A1 as the random variable of the normal distribution, the probability density axis A3 as the probability density of the normal distribution, and a time axis A4.

Fig. 11 illustrates the analysis result of the change of Company I over time. First, the acquisition unit 20 acquires, as the evaluation value 210, the number of published applications in each IPC main group as the technology classification of Company I. In this case, the period is taken by setting July 1, 2011 to June 30, 2013 as the period of the first acquisition information 220A and July 1, 2016 to June 30, 2018 as the period of the second acquisition information 220B, and this data is used as data in 2017.

The period is similarly taken by setting July 1, (2011 + N) to June 30, (2013 + N) as the period of the first acquisition information 220A and July 1, (2016 + N) to June 30, (2018 + N) as the period of the second acquisition information 220B, and this data is used as data in (2017 + N). In the third embodiment, N is set to 1, 2, 3, 4, and 5.

Subsequently, the calculation unit 30 calculates the difference information 320 between the first acquisition information 220A and the second acquisition information 220B. Subsequently, the distribution generation unit 40 performs the operations from Expression (1) to Expression (4), generates a normal distribution, acquires an expected value and a standard deviation, and holds the normal distribution, the expected value, and the standard deviation. Subsequently, the distribution placement unit 50 places the normal distributions of Company I, expressed in terms of probability density and random variable, in time series along the time axis A4.

Operation

In the information processing device 10 according to the third embodiment, the distribution placement unit 50 may place a normal distribution on coordinate axes in three dimensions, with the random variable axis A1 as the random variable of the normal distribution, the probability density axis A3 as the probability density of the normal distribution, and the time axis A4 (see Fig. 11).

By placing a normal distribution on the coordinate axes in three dimensions, with the random variable axis A1 as the random variable of the normal distribution, the probability density axis A3 as the probability density of the normal distribution, and the time axis A4, the normal distributions of an applicant in a predetermined period are placed side by side along the time axis A4. Accordingly, it is possible to ascertain a trend in technology classification of the applicant.

Other configurations and operational effects are the same as those in the above embodiments, and the descriptions thereof are therefore omitted.

Fourth Embodiment

An information processing device according to a fourth embodiment differs from the above embodiments in that the configuration of the distribution placement unit is different. The same terminology or the same symbols are used to describe the same or equivalent parts described in the above embodiments.

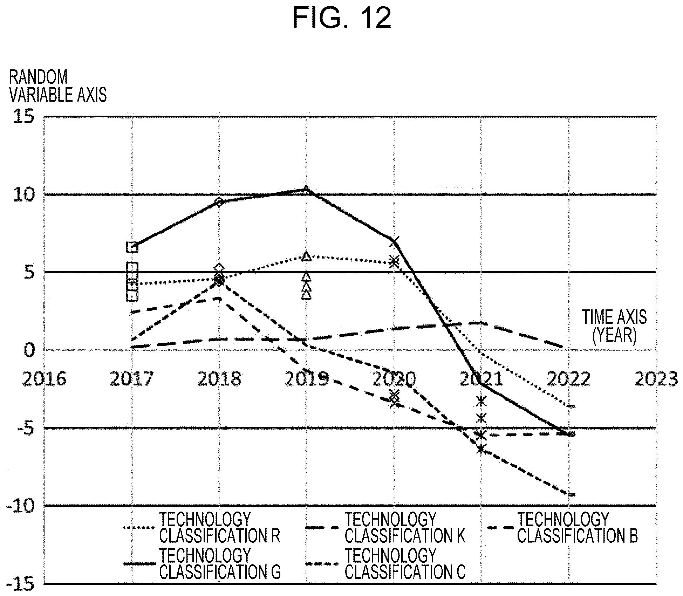

As illustrated in Fig. 12, the distribution placement unit 50 places a normal distribution on the coordinate axes in two dimensions, with the random variable axis A1 as the random variable of the normal distribution and the time axis A4.

In Fig. 12, the vertical axis is the random variable axis A1 and the horizontal axis is the time axis A4. Technology classifications greater than or equal to $3\sigma$ and less than or equal to $-3\sigma$ are plotted. In fact, the technology classification can be illustrated for each plot, but is not illustrated in the present disclosure. Company I maintains the number of published applications in a technology classification K, but the numbers of published applications in technology classifications R, B, G, and C in which it has previously excelled reduce. This indicates that Company I looks for the next technology classification to concentrate on. From this display, it is possible to ascertain how each technology classification follows the process of "concentration and selection".

Table 2 indicates, for Company I, the changes in an expected value and a standard deviation over time and the results of counting of technology classifications that appear at and above $3\sigma$ and at and below $-3\sigma$ set as threshold values. Table 2 indicates, for Company I, an expected value in each year, a standard deviation in each year, and the results of counting of technology classifications that appear at and above $3\sigma$ and at and below $-3\sigma$ set as threshold values. The counting was performed on the basis of the graph in Fig. 12.

Table 2

|  | Expected Value | Standard Deviation | the Number of Technology Classifications at and above $3\sigma$ | the Number of Technology Classifications at and below $-3\sigma$ |
|---|---|---|---|---|
| Company I 2017 | 2.242 | 4.509 | 6 | 0 |
| Company I 2018 | 2.506 | 5.682 | 5 | 0 |
| Company I 2019 | 2.126 | 6.107 | 5 | 0 |
| Company I 2020 | 1.369 | 4.998 | 3 | 4 |
| Company I 2021 | -0.497 | 4.580 | 0 | 5 |
| Company I 2022 | -4.187 | 8.602 | 0 | 4 |

Operation

In the information processing device 10 according to the fourth embodiment, the distribution placement unit 50 may place a normal distribution on coordinate axes in two dimensions, with the random variable axis A1 as the random variable of the normal distribution and the time axis A4 (see Fig. 12).

By placing the normal distribution on the coordinate axes in two dimensions, with the random variable axis A1 as the random variable of the normal distribution and the time axis A4, the normal distributions of an applicant in a predetermined period are visualized in two dimensions. Accordingly, it is possible to ascertain the transition of each technology classification of the applicant.

Other configurations and operational effects are the same as those in the above embodiments, and the descriptions thereof are therefore omitted.

An information processing device, an information processing method, and a program according to the present invention have been described on the basis of the first to fourth embodiments. However, the specific configuration is not limited to these embodiments, and design changes, etc. are permitted as long as they do not depart from the gist of the invention in each claim in the claims.

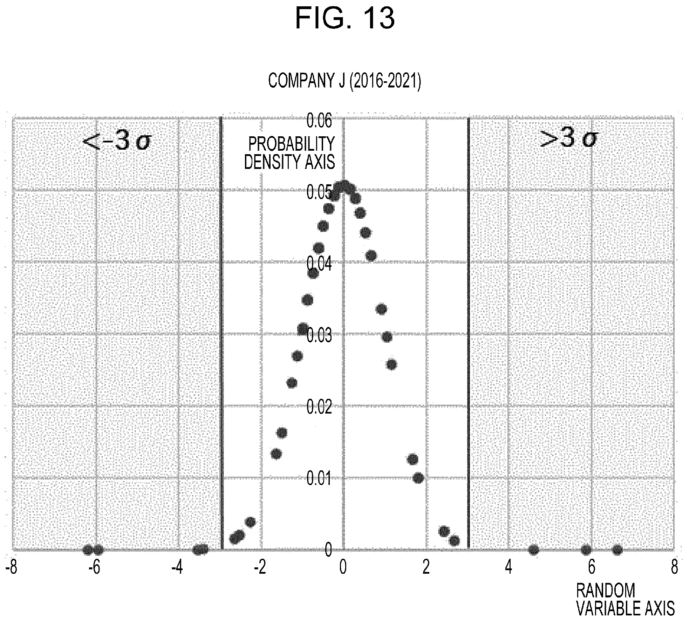

As illustrated in Fig. 13, for Company J, the acquisition unit 20 may set the period of July 1, 2016 to June 30, 2018 as the period of the first acquisition information and the period of July 1, 2021 to June 30, 2023 as the period of the second acquisition information and acquire, as the evaluation value 210, the number of published applications in each IPC main group as a technology classification. In this case, the calculation unit 30 may calculate the difference information 320 between the first acquisition information 220A and the second acquisition information 220B. The distribution generation unit 40 performs the operations from Expression (1) to Expression (4), generates a normal distribution, acquires an expected value and a standard deviation, and holds the normal distribution, the expected value, and the standard deviation. The distribution placement unit 50 places the normal distribution on the coordinate axes in two dimensions, with the probability density axis and the random variable axis. From this display, it is possible to identify the technology classifications for which Company J increases the number of published applications in this period at or above $3\sigma$, and the technology classifications for which it reduces the number of published applications in this period at or below $-3\sigma$.

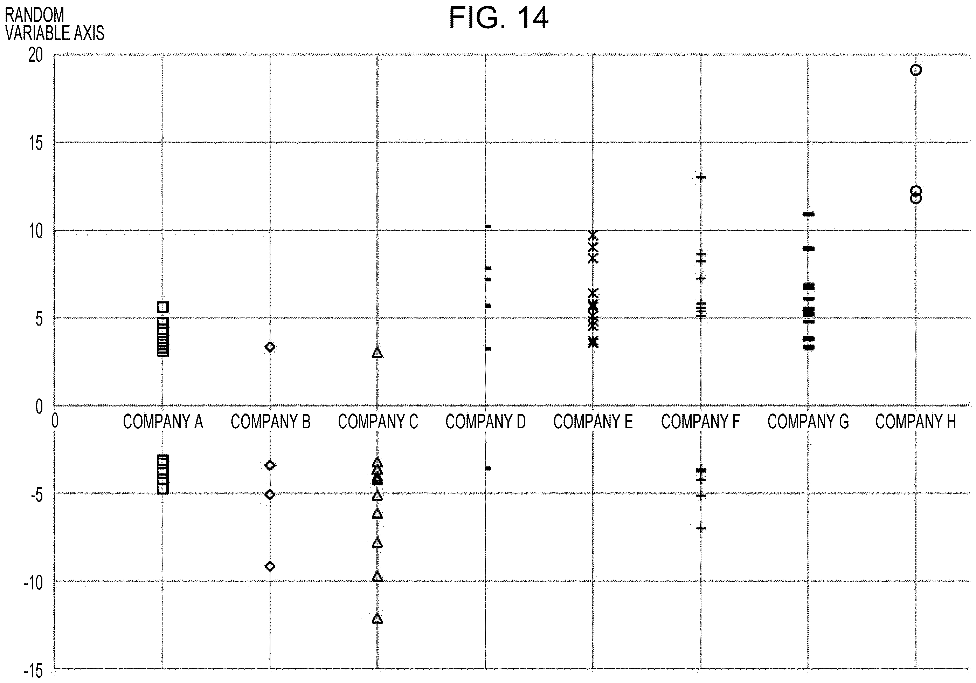

As illustrated in Fig. 14, the distribution placement unit 50 may set the random variable axis as the vertical axis and an axis for each company as the horizontal axis and plot the technology classifications greater than or equal to the random variable of $3\sigma$ and less than or equal to $-3\sigma$. In fact, the technology classification can be illustrated for each plot, but is not illustrated Fig. 14. This display clarifies which technology classification each company concentrates on and which technology classification is downsized by selection.

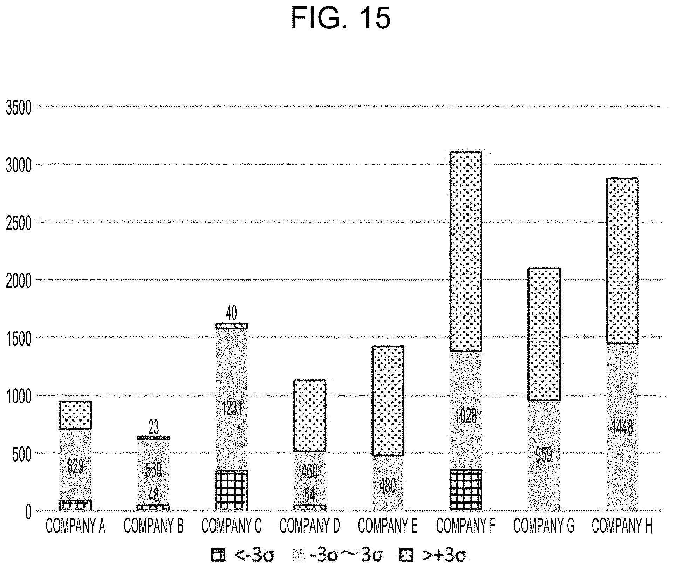

As illustrated in Fig. 15, the distribution placement unit 50 may display the technology classifications at or above $3\sigma$, between $3\sigma$ and $-3\sigma$, and at or below $-3\sigma$ on the coordinate axes in two dimensions, with the vertical axis as the number of published applications and the horizontal axis as an axis for each company, in the form of a stacked bar graph. As a result, the actual volume of the number of published applications can be understood.

**Claims**

1. An information processing device (10) comprising:

   an acquisition unit (20) configured to acquire predetermined acquisition information (220) from intellectual property data (5);
   a calculation unit (30) configured to calculate, for each applicant, an intellectual property evaluation value (310) in each technology classification in a predetermined period based on the acquisition information (220);
   a distribution generation unit (40) configured to generate a distribution based on the intellectual property evaluation value (310) calculated by the calculation unit (30); and
   a distribution placement unit (50) configured to place the distribution.

2. The information processing device according to Claim 1, wherein the acquisition unit acquires, for each applicant, an evaluation value in each technology classification in a predetermined period as the acquisition information.

3. The information processing device according to Claim 2, wherein the evaluation value includes at least one of a number of applications, a number of published applications, a number of patents, a number of citations, a number of cited times, and a total of their weighted values.

4. The information processing device according to Claim 2, wherein the calculation unit calculates, using first acquisition information in a predetermined period and second acquisition information in a period different from the predetermined period of the first acquisition information in the acquisition information, a difference of the evaluation value in each technology classification in the second acquisition information with respect to the evaluation value in the technology classification in the first acquisition information as the intellectual property evaluation value and calculates a group of the intellectual property evaluation values as difference information.

5. The information processing device according to Claim 1, wherein the distribution generation unit generates a normal distribution as the distribution.

6. The information processing device according to Claim 4, wherein the distribution generation unit generates a normal distribution based on the difference information, acquires an expected value and a standard deviation, and holds the normal distribution, the expected value, and the standard deviation.

7. The information processing device according to Claim 5, wherein the distribution placement unit places the normal distribution on coordinate axes in three dimensions, with a random variable axis as a random variable of the normal distribution, a base axis as at least one of an expected value of the normal distribution, a standard deviation of the normal distribution, and a total of their weighted values, and a probability density axis as a probability density of the normal distribution.

8. The information processing device according to Claim 5, wherein the distribution placement unit places the normal distribution on coordinate axes in two dimensions, with a random variable axis as a random variable of the normal distribution and a base axis as at least one of an expected value of the normal distribution, a standard deviation of the normal distribution, and a total of their weighted values.

9. The information processing device according to Claim 5, wherein the distribution placement unit places the normal distribution on coordinate axes in three dimensions, with a random variable axis as a random variable of the normal distribution, a probability density axis as a probability density of the normal distribution, and a time axis.

10. The information processing device according to Claim 5, wherein the distribution placement unit places the normal distribution on coordinate axes in two dimensions, with a random variable axis as a random variable of the normal distribution and a time axis.

11. An information processing method comprising:

   acquiring predetermined acquisition information (220) from intellectual property data (5);

calculating, for each applicant, an intellectual property evaluation value (310) in each technology classification in a predetermined period based on the acquisition information (220); and

generating a distribution based on the intellectual property evaluation value (310).

12. A program causing a computer to implement:

acquiring predetermined acquisition information (220) from intellectual property data (5);

calculating, for each applicant, an intellectual property evaluation value (310) in each technology classification in a predetermined period based on the acquisition information (220); and

generating a distribution based on the intellectual property evaluation value (310).

# FIG. 1

INTELLECTUAL PROPERTY DATA — 5

N

PREDETERMINED ACQUISITION INFORMATION

220

INFORMATION PROCESSING DEVICE — 10

CPU — 11

ROM — 12

RAM — 13

STORAGE — 14

INPUT/OUTPUT I/F — 15

16

OUTPUT DEVICE — 60

EP 4 668 181 A1

# FIG. 2

INFORMATION
PROCESSING DEVICE — 10

ACQUISITION UNIT — 20

CALCULATION UNIT — 30

DISTRIBUTION
GENERATION UNIT — 40

DISTRIBUTION
PLACEMENT UNIT — 50

# FIG. 3

## FIG. 4

CALCULATION UNIT ~~30

DIFFERENCE INFORMATION ~~320

TECHNOLOGY CLASSIFICATION A,
INTELLECTUAL PROPERTY EVALUATION VALUE: A2-A1 ~~310

TECHNOLOGY CLASSIFICATION B,
INTELLECTUAL PROPERTY EVALUATION VALUE: B2-B1

TECHNOLOGY CLASSIFICATION C,
INTELLECTUAL PROPERTY EVALUATION VALUE: C2-C1

...

=

220B, 220

SECOND ACQUISITION INFORMATION

TECHNOLOGY CLASSIFICATION A,
EVALUATION VALUE: A2

TECHNOLOGY CLASSIFICATION B,
EVALUATION VALUE: B2

TECHNOLOGY CLASSIFICATION C,
EVALUATION VALUE: C2

...

210

−

220A, 220

FIRST ACQUISITION INFORMATION

TECHNOLOGY CLASSIFICATION A,
EVALUATION VALUE: A1

TECHNOLOGY CLASSIFICATION B,
EVALUATION VALUE: B1

TECHNOLOGY CLASSIFICATION C,
EVALUATION VALUE: C1

...

210

EP 4 668 181 A1

# FIG. 5

DISTRIBUTION GENERATION UNIT

DISPLAY OF NORMAL DISTRIBUTION OF
DIFFERENCE INFORMATION

PROBABILITY
DENSITY AXIS

EXAMPLE
IN THE CASE OF TECHNOLOGY
CLASSIFICATION A

-3  -2  -1      1    2    3   RANDOM
                            VARIABLE AXIS

(A2-A1)/ STANDARD DEVIATION

40

FIG. 6

# FIG. 7

```
        ┌─────────┐
        │  START  │
        └─────────┘
             │
             ▼
   ┌──────────────────────┐
   │ ACQUIRE ACQUISITION  │     S101
   │     INFORMATION      │
   └──────────────────────┘
             │
             ▼
   ┌──────────────────────┐
   │ CALCULATE INTELLECTUAL │   S102
   │ PROPERTY EVALUATION VALUE │
   └──────────────────────┘
             │
             ▼
   ┌──────────────────────┐
   │ GENERATE DISTRIBUTION │    S103
   └──────────────────────┘
             │
             ▼
   ┌──────────────────────┐
   │  PLACE DISTRIBUTION   │    S104
   └──────────────────────┘
             │
             ▼
        ┌─────────┐
        │   END   │
        └─────────┘
```

# FIG. 8

DISTRIBUTION PLACEMENT UNIT

NORMAL DISTRIBUTION CURVE FOR APPLICANT A
EXPECTED VALUE: $\mu_A$
STANDARD DEVIATION VALUE: $X_A$

NORMAL DISTRIBUTION CURVE FOR APPLICANT B
EXPECTED VALUE: $\mu_B$
STANDARD DEVIATION VALUE: $X_B$

PROBABILITY
DENSITY AXIS

TECHNOLOGY
CLASSIFICATION D

SPECIFIC
THRESHOLD
VALUE $Y_2$

SPECIFIC
THRESHOLD
VALUE $Y_1$

RANDOM
VARIABLE AXIS

TECHNOLOGY
CLASSIFICATION C

TECHNOLOGY CLASSIFICATION B

TECHNOLOGY CLASSIFICATION A

50

# FIG. 9

FIG. 10

# FIG. 11

EP 4 668 181 A1

# FIG. 12

# FIG. 13

COMPANY J (2016-2021)

FIG. 14

# FIG. 15

# EP 4 668 181 A1

**EUROPEAN SEARCH REPORT**

**Application Number**

EP 25 18 1293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/365386 A1 (CARSTENS DAVID W [US] ET AL) 11 December 2014 (2014-12-11)<br>* paragraph [0099] *<br>* paragraph [0113] - paragraph [0115] *<br>* paragraph [0117] - paragraph [0126] *<br>* paragraph [0170] *<br>* paragraph [0105] *<br>* figures 4,16 *<br>----- | 1-12 | INV.<br>G06Q10/04<br>G06Q50/18 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 27 June 2025 | van Praagh, Kay |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

32

## ANNEX TO THE EUROPEAN SEARCH REPORT
## ON EUROPEAN PATENT APPLICATION NO.

EP 25 18 1293

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2025

| Patent document cited in search report | Publication date | Patent family member(s) | Publication date |
|---|---|---|---|
| US 2014365386 A1 | 11-12-2014 | NONE | |

EPO FORM P0459

For more details about this annex : see Official Journal of the European Patent Office, No. 12/82

**EP 4 668 181 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011138331 A
- JP 2022158621 A